# EUROPÄISCHE PATENTANMELDUNG

(11) **EP 2 860 765 A1**
(43) Veröffentlichungstag der Anmeldung: **15.04.2015**
(21) Anmeldenummer: 13188268.0
(22) Anmeldetag: 11.10.2013
(51) Int. Cl.: H01L 31/048

(54) **Anschlussdose und Verfahren zur Montage einer Anschlussdose**

(71) Anmelder: Multi-Holding AG, 4123 Allschwil (CH)
(72) Erfinder: Kuhnert, Thomas, 45136 Essen (DE)
(74) Vertreter: Frischknecht, Harry Ralph

(57) **Zusammenfassung**

Ein Anschlussdosengehäuse (1) für eine Photovoltaikpaneele (2) umfasst eine Seitenwandung (3), und einen eine Bodenebene (7) aufspannenden Boden (4), wobei Seitenwandung (3) und Boden (4) einen Innenraum (6) zur Aufnahme von Elektroelementen (14) zur Wegführung von durch die Photovoltaikpaneele (2) erzeugter elektrischer Energie definieren, und wobei das Anschlussdosengehäuse (1) mit dem Boden (4) auf einer Photovoltaikpaneele (2) anordbar ist, wobei im Boden (4) mindestens eine Öffnung (10) angeordnet ist, durch welche mindestens ein elektrisch leitendes Leiterelement (9) der Photovoltaikpaneele (2) in den Innenraum (6) führbar ist. Weiter umfasst das Anschlussdosengehäuse (1) ein Führungselement (8), welches derart angeordnet ist, dass das Leiterelement (9) der Photovoltaikpaneele (2) bei der Kontaktierung des Führungselementes (8) während der Montage umlenkbar bzw. umbiegbar ist.

## Beschreibung

### TECHNISCHES GEBIET

Die vorliegende Erfindung betrifft eine Anschlussdose, insbesondere für ein Photovoltaikmodul, nach dem Oberbegriff von Anspruch 1. Weiter betrifft die Erfindung ein Verfahren zur Montage der Anschlussdose, insbesondere auf einem Photovoltaikmodul, nach dem Oberbegriff von Anspruch 14 und ein Photovoltaikmodul nach dem Oberbegriff von Anspruch 12.

### STAND DER TECHNIK

Aus dem Stand der Technik sind Anschlussdosen für Photovoltaikmodule bekannt. Solche Anschlussdosen dienen der Aufnahme von elektrischen Elementen. Solche elektrische Elemente können beispielsweise die Gestalt einer Bypass-Diode aufweisen, mit welcher bei teilweise abgeschalteter Solarzelle bzw. Photovoltaikpaneelen die damit verbundenen Problematiken verhindert werden können. Beispielsweise zeigt die WO 2009/062326 eine derartige Anschlussdose.

Die Anschlussdose wird elektrisch an Anschlusselemente des Photovoltaikmoduls angeschlossen. Beispielsweise werden Anschlusselemente in der Form eines metallischen Streifens vom Photovoltaikmodul in die Anschlussdose eingeführt und dort mit den elektrisch leitenden Elementen der Anschlussdose verbunden.

Der elektrische Anschluss der Anschlussdose an die elektrischen Elemente des Photovoltaikmoduls ist bei der Herstellung ein wichtiger Schritt. Allerdings sind die aus dem Stand der Technik bekannten Verfahren und Anschlussdosen vergleichsweise komplex ausgebildet, was die elektrische Kontaktierung erschwert.

### DARSTELLUNG DER ERFINDUNG

Ausgehend von diesem Stand der Technik liegt der vorliegenden Erfindung eine Aufgabe zugrunde, ein Anschlussdosengehäuse anzugeben, welches einfacher zu montieren ist.

Diese Aufgabe löst der Gegenstand nach Anspruch 1. Demgemäss umfasst ein Anschlussdosengehäuse für eine Photovoltaikpaneele eine Seitenwandung und einen eine Bodenebene aufspannenden Boden. Die Seitenwandung und der Boden definieren einen Innenraum zur Aufnahme von Elektroelementen zur Wegführung von durch die Photovoltaikpaneele erzeugter elektrischer Energie. Das Anschlussdosengehäuse ist mit dem Boden auf einer Photovoltaikpaneele anordbar, wobei im Boden mindestens eine Öffnung angeordnet ist, durch welche mindestens ein elektrisch leitendes Leiterelement der Photovoltaikpaneele in den Innenraum führbar ist. Weiter umfasst das Anschlussdosengehäuse ein Führungselement, welches derart angeordnet ist, dass das Leiterelement der Photovoltaikpaneele bei der Kontaktierung des Führungselementes während der Montage umlenkbar bzw. umbiegbar ist.

Durch diese Umlenkung kann das Leiterelement in eine für die Kontaktierung der Elektroelemente vorteilhafte Lage gebracht werden. Diese Umformung erfolgt bei der Platzierung des Anschlussdosengehäuses auf der Photovoltaikpaneele, was eine besonders wirtschaftliche Herstellung erlaubt.

In einer ersten besonders bevorzugten Ausführungsform wird das Leiterelement derart umgebogen, dass es parallel zur Oberfläche der Photovoltaikpaneele liegt. So kann es in einfacher Art und Weise mit den Elektroelementen verbunden werden.

In einer zweiten bevorzugten Ausführungsform wird das Leiterelement in eine Ebene gebogen, welche bevorzugt ca. 45° zur Oberfläche der Photovoltaikpaneele liegt. Andere Winkel sind auch denkbar. Hierdurch kann das Leiterelement gut mit den Elektroelementen elektrisch verbunden werden, wobei das Leiterelement ggf. durch weitere Werkzeuge im Fertigungsprozess umgebogen wird, so dass dieses parallel zur Oberfläche der Photovoltaikpaneele liegt.

Das Leiterelement ist vorzugsweise ein metallisches Anschlussband aus Kupfer oder ein Flachleiter.

Gegenüber der Öffnung weist die Anschlussdose bevorzugt eine obere Öffnung auf, welche mit einem Deckel verschliessbar ist. Diese obere Öffnung schafft Zugang zum Innenraum.

Vorzugsweise weist das Führungselement die Form einer Fläche und/oder die Form einer linienförmigen Struktur auf. Das Führungselement ist also geeignet, ein entsprechendes Leiterelement durch die Relativbewegung zwischen Führungselement und Leiterband sowie durch die Ausbildung des Führungselementes, das Leiterelement umzubiegen.

Vorzugsweise ist das Führungselement im Bereich, insbesondere ausschliesslich im Bereich, der mindestens einen Öffnung angeordnet ist. So wird sichergestellt, dass das Führungselement in Kontakt mit dem Leiterelement kommt, sobald das Leiterelement im Bereich der Öffnung, also vor der Öffnung oder bereits in der Öffnung, ist.

Besonders bevorzugt liegt das Führungselement innerhalb des Innenraums. Das heisst, dass Führungselement erstreckt sich von der Bodenebene her gesehen in den Innenraum hinein. In einer anderen bevorzugten Ausführungsform liegt das Führungselement ausserhalb des Innenraums. Das heisst, dass sich das Führungselement von der Bodenebene her gesehen nach aussen erstreckt. In einer weiteren bevorzugten Ausführungsform liegt das Führungselement sowohl im Innenraum als auch ausserhalb des Innenraums. Das Führungselement erstreckt sich also vom Innenraum gesehen durch die Bodenebene nach aussen.

Vorzugsweise ist das Führungselement geneigt und/oder gekrümmt, insbesondere konkav gekrümmt, zur Bodenebene ausgebildet ist. Über die Neigung oder die Krümmung oder die Krümmung und die Neigung wird das Leiterelement entsprechen verformt bzw. umgebogen. Der Grad der Neigung bzw. der Krümmung bzw. der Krümmung und der Neigung kann beliebig sein. Beispielsweise ist es denkbar, das Führungselement derart auszugbilden, dass das Leiterelement nach erfolgter Verformung in einem Winkel im Bereich von 45° bis 0° zur Oberfläche der Photovoltaikpaneele liegt. Das Leiterelement liegt beim Winkel von 0° parallel zur Oberfläche der Photovoltaikpaneele.

Die Krümmung schliesst dabei einen Radius ein, wobei das Leiterelement dann entlang dieses Radius umgebogen bzw. umgelenkt wird.

Vorzugsweise ist das Führungselement am Anschlussdosengehäuse angeformt. Anschlussdosengehäuse und Führungselement sind also einstückig bzw. integral bereitgestellt. Beispielsweise kann das Führungselement durch die Herstellung des Anschlussdosengehäuses mittels eines Spritzgussverfahrens hergestellt werden. In einer besonders bevorzugten Ausführungsform ist das Führungselement Teil der Seitenwandung. Die Seitenwandung stellt dabei das Führungselement bereit.

Vorzugsweise nehmen die Neigung und/oder der Grad der Krümmung des Führungselementes zur Bodenebene gesehen mit zunehmender Distanz zwischen Bodenebene und Innenraum zu. Je weiter die Führungsfläche von der Bodenebene im Innenraum liegt, desto grösser ist deren Neigung bzw. Krümmung.

Besonders bevorzugt verläuft das Führungselement über einen ersten Abschnitt im Wesentlichen rechtwinklig zur Bodenebene und in einem zweiten Abschnitt gekrümmt und/oder geneigt zur Bodenebene verläuft. Der rechtwinklige Verlauf hat den Vorteil, dass das Leiterelement bei der Kontaktierung des Führungselements noch nicht direkt verformt wird, sondern durch den ersten Abschnitt zur eigentlichen Fläche, welche für die Verformung relevant ist, geführt wird.

Besonders bevorzugt weist die Öffnung, durch welche das Leiterelement in den Innenraum geführt wird, einen rechteckigen oder einen ovalen oder eine runden oder einen polygonalen Querschnitt auf. Teile des Führungselementes stellen eine die Öffnung begrenzende Wandung bereit.

Eine Anschlussdose umfasst ein Anschlussdosengehäuse nach obiger Beschreibung. Weiter umfasst die Anschlussdose Elektroelemente zur Wegführung von durch die Photovoltaikpaneele erzeugter elektrischer Energie. Die Elektroelemente sind im Innenraum des Anschlussdosengehäuses angeordnet, wobei die Elektroelemente mit dem mindestens einen Leiterelement elektrisch leitend verbunden werden bzw. in Verbindung stehen.

Die Elektroelemente umfassen in einer besonders bevorzugten Ausführungsform Verbindungselemente, eine Bypass-Diode und Anschlusselemente. Die Verbindungselemente dienen der elektrisch leitenden Verbindung mit mindestens einem Leiterelement der Photovoltaikpaneele und der Bypassdiode. Die Anschlusselemente dienen der elektrisch leitenden Verbindung der Bypassdiode und externen Elementen, wie beispielsweise einem Kabel.

Vorzugsweise weisen die Elektroelemente mindestens eine Kontaktfläche auf, zu welcher das Leiterelement verbunden wird, wobei die Kontaktfläche im montierten Zustand parallel oder geneigt zur Oberfläche der Photovoltaikpaneele liegt. Die Oberfläche liegt bevorzugterweise nicht rechtwinklig zur Oberfläche.

Ein Photovoltaikmodul umfasst eine Photovoltaikpaneele und mindestens eine Anschlussdose nach obiger Beschreibung bzw. ein Anschlussdosengehäuse nach obiger Beschreibung. Die Photovoltaikpaneele weist elektrische Leiterelemente auf, welche aus der Photovoltaikpaneele hinausragen und welche bei montiertem Anschlussdosengehäuse in den Innenraum des Anschlussdosengehäuses hineinragen. Über die Leiterelemente wird die von der Photovoltaikpaneele erzeugte elektrische Energie aus der Photovoltaikpaneele in die Anschlussdose geführt.

Vorzugsweise steht das Anschlussdosengehäuse indirekt über ein Befestigungsmittel mit der Photovoltaikpaneele in Verbindung. Das Befestigungsmittel ist vorzugsweise ein stoffschlüssiges Befestigungsmittel und sorgt für eine stoffschlüssige Verbindung zwischen Anschlussdosengehäuse und der Photovoltaikpaneele. Das Befestigungsmittel ist beispielsweise ein Kleber, insbesondere ein Silikonklebersein, welcher zudem den Spalt zwischen Paneele und Bodenebene bezüglich Fluiden dichtet.

Ein Verfahren zur Montage einer Anschlussdose nach obiger Beschreibung oder eines Anschlussdosengehäuses nach obiger Beschreibung ist dadurch gekennzeichnet, dass das Anschlussdosengehäuse zur Oberfläche der Photovoltaikpaneele bewegt wird, bis das Anschlussdosengehäuse mit der Bodenebene ggf. über das Befestigungsmittel in Kontakt ist, wobei während der Bewegung ein Kontakt zwischen dem mindestens einen Leiterelement und dem Führungselement hergestellt wird, und wobei nach der Herstellung des Kontaktes das mindestens eine Leiterelement durch das Führungselement geführt und gebogen wird.

Vorzugsweise wird, sobald das Anschlussdosengehäuse mit der Oberfläche der Photovoltaikpaneele in Kontakt ist, das Leiterelement elektrisch leitend mit den Elektroelementen verbunden. Es sind stoffschlüssige, als auch formschlüssige oder kraftschlüssige Verbindungen möglich. Bevorzugt ist eine Löt- oder Schweissverbindung.

Besonders bevorzugt wird vor dem Schritt des Bewegens des Anschlussdosengehäuses zur Oberfläche der Photovoltaikpaneele das mindestens eine Leiterelement im Wesentlichen rechtwinklig zur Oberfläche positioniert. Hierdurch wird sichergestellt, dass ein definierter Kontakt zwischen dem Leiterelement und dem Führungselement hergestellt wird.

Vorzugsweise wird das mindestens eine Leiterelement vor oder während des Verbindens mit den Elektroelementen weiter umgeformt.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine schematische Schnittdarstellung durch eine Anschlussdose mit einem Anschlussdosengehäuse und eine Photovoltaikpaneele, wobei die Anschlussdose beabstandet zur Photovoltaikpaneele gezeigt wird;
- Fig. 2: die Schnittdarstellung nach Figur 1, wobei die Anschlussdose in Kontakt zur Photovoltaikpaneele gezeigt wird;
- Fig. 3: eine schematische Perspektivansicht der teilweise geschnitten dargestellten Anschlussdose mit einem Anschlussdosengehäuse und der Photovoltaikpaneele nach Figur 1, wobei die Anschlussdose beabstandet zur Photovoltaikpaneele gezeigt wird;
- Fig. 4: die Perspektivansicht nach Figur 3, wobei die Anschlussdose in Kontakt zur Photovoltaikpaneele gezeigt wird;
- Fig. 5: die Anschlussdose nach Figur 1 während der Montage; und
- Fig. 6: die Anschlussdose nach Figur 1 während der Montage.

### BESCHREIBUNG BEVORZUGTER AUSFÜHRUNGSFORMEN

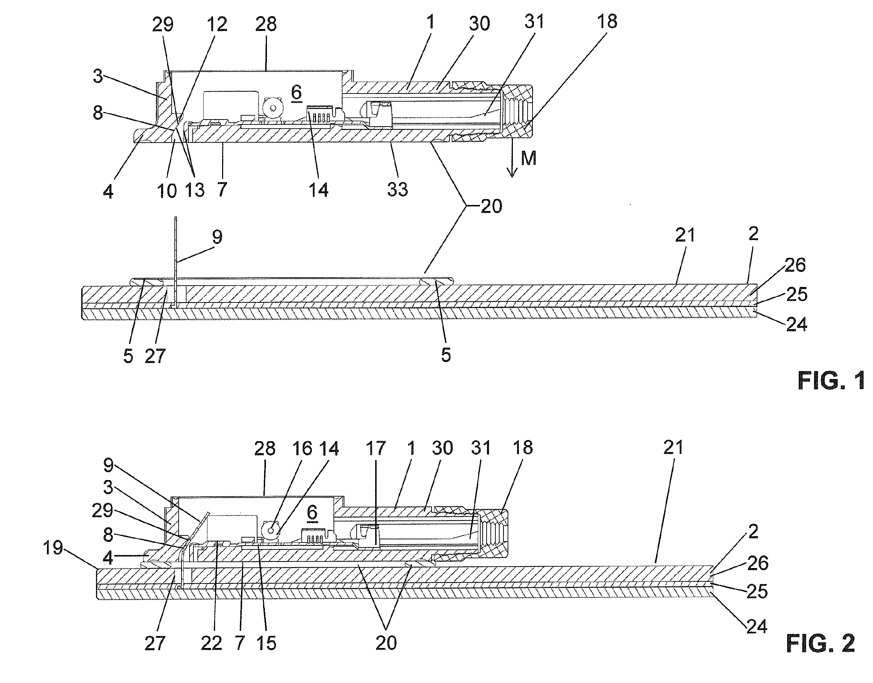

In der Figur 1 wird eine schematische Schnittdarstellung durch eine Anschlussdose 18 mit einem Anschlussdosengehäuse 1 und durch eine Photovoltaikpaneele 2 gezeigt. Die Anschlussdose 18 ist dabei beabstandet zur Photovoltaikpaneele 2 gezeigt. Es handelt sich hierbei um die Position der Anschlussdose 18 kurz vor der Montage.

In der Figur 2 wird die gleiche Konfiguration wie in der Figur 1 gezeigt, wobei sich hier die Anschlussdose 18 in Verbindung mit der Photovoltaikpaneele 2 befindet. Die Anschlussdose 18 befindet sich also im montierten Zustand. Die Anschlussdose 18 liegt auf der Photovoltaikpaneele 2 auf. Anschlussdose 18 und Photovoltaikpaneele 2 bilden ein Photovoltaikmodul 19.

Die Photovoltaikpaneele 2 ist eine aus dem Stand der Technik bekannte Photovoltaikpaneele. Die Paneele umfasst in der hier gezeigten Ausführungsform im Wesentlichen eine transparente Glasschicht 24, eine Solarzellenschicht 25 und eine Trägerschicht 26. Auf der Trägerschicht 26 sind die Solarzellen 25 angeordnet. Gegenüber der Trägerschicht 26 liegt über den Solarzellen 25 die Glasschicht 24. Die Glasschicht 24 bildet die Vorderseite der Photovoltaikpaneele 22 und die Trägerschicht 26 bildet deren Rückseite. Die Trägerschicht 26 weist mindestens eine Durchführöffnung 27 auf. Durch diese Durchführöffnung 27 wird mindestens ein Leiterelement 9 der Photovoltaikpaneele 2 nach aussen geführt. Dieses elektrische Leiterelement 9 dient der Wegführung der von den Solarzellen 25 erzeugten elektrischen Energie. Das Leiterelement 9 wird mit der Anschlussdose 18 bzw. den dafür vorgesehenen Elektroelementen 14 in der Anschlussdose 18 elektrisch verbunden. Hier steht das Leiterelement 9 rechtwinklig zur Oberfläche der Photovoltaikpaneele 2.

Die Photovoltaikpaneele 2 kann auch anders als oben beschrieben ausgebildet sein.

In der Folge wird nun anhand der Figuren 1 und 2 der Aufbau des Anschlussdosengehäuses 1 genauer erläutert.

Das Anschlussdosengehäuse 1 stellt das Gehäuse der Anschlussdose 18 bereit. Das Anschlussdosengehäuse 1 dient im Wesentlichen der Aufnahme von Elektroelementen 14, welche durch das Anschlussdosengehäuse 1 vor Witterungseinflüssen geschützt sind.

Das Anschlussdosengehäuse 1 weist im Wesentlichen eine Seitenwandung 3 und einen Boden 4 auf. Der Boden 4 spannt eine Bodenebene 7 auf. Die Seitenwandung 3 und der Boden 4 definieren einen Innenraum 6 zur Aufnahme von den besagten Elektroelementen 14 zur Wegführung von der durch die Photovoltaikpaneelen 2 erzeugter elektrischer Energie. Die Seitenwandung 3 erstreckt sich um den Innenraum 6 umlaufend.

Das Anschlussdosengehäuse 1 ist mit dem Boden 4 auf der Photovoltaikpaneele 2 anordbar. Hier wird das Anschlussdosengehäuse 1 auf der Trägerschicht 26 angeordnet. Das Anschlussdosengehäuse 1 kann dabei mit dem Boden 4 direkt auf der Photovoltaikpaneele 2 aufliegen oder über eine Schicht 20 eines Befestigungsmittels mit der Photovoltaikpaneele 2 in Kontakt sein. Die Schicht 20 des Befestigungsmittels umfasst in einer besonders bevorzugten Ausführungsform ein Montagekleber 33 und eine Dichtung 5. Die Dichtung 5 sorgt dafür, dass keine Feuchtigkeit zwischen Boden 4 des Anschlussdosengehäuses 1 und Oberfläche 21 der Photovoltaikpaneele 2 eindringen kann.

Im Boden 4 des Anschlussdosengehäuses 1 ist mindestens eine Öffnung 10 angeordnet. Durch diese mindestens eine Öffnung 10 ist das elektrisch leitende Leiterelement 9 in den Innenraum 6 des Anschlussdosengehäuses 1 führbar. Dies wird in der Figur 2 entsprechend gezeigt. Das elektrisch leitende Leiterelement 9 ragt also über die Öffnung 10 in den Innenraum 6 des Anschlussdosengehäuses 1 ein. Die Zahl der Öffnungen 10 kann der Zahl der Leiterelemente 9 entsprechen, wobei pro Leiterelement 9 eine Öffnung 10 vorgesehen ist. Alternativ können auch für mehrere Leiterelemente 9 eine Öffnung 10 vorgesehen sein. Mehrere Leiterelemente 9 werden dann durch eine gemeinsame Öffnung 10 geführt.

Unabhängig von der Zahl der Öffnung 10 ist die Öffnung 10 bezüglich des Querschnittes derart ausgebildet, dass das Leiterelement 9 mit grösserem Spiel durch die Öffnung 10 hindurchführbar ist.

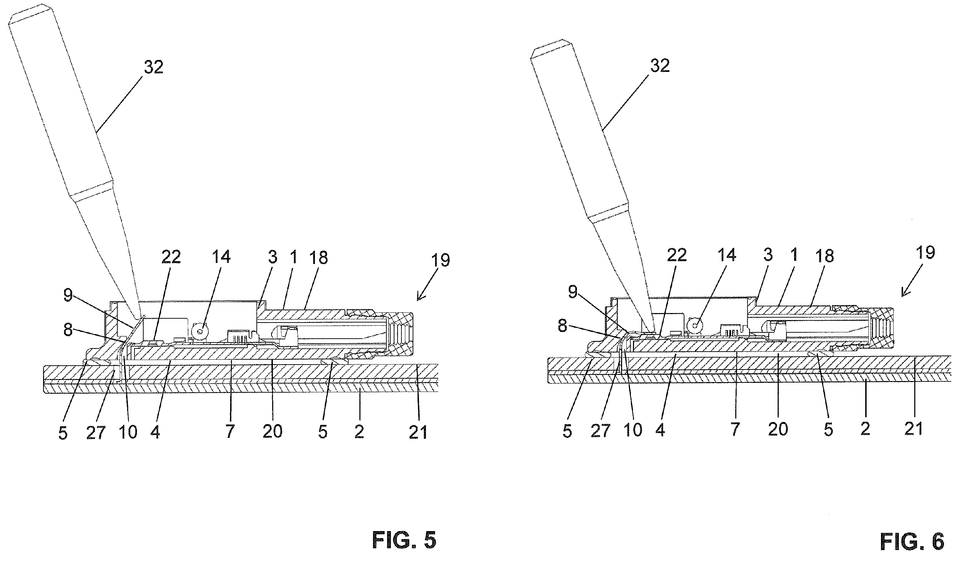

Das Anschlussdosengehäuse 1 umfasst weiter ein Führungselement 8. Das Führungselement 8 ist dabei derart angeordnet bzw. ausgebildet, dass dieses das Leiterelement 9 der Photovoltaikpaneelen 2 bei der Kontaktierung des Führungselementes 8 während der Montage umlenkt bzw. umbiegt. In der Figur 1 wird das Leiterelement 9 in der ursprünglichen Lage vor der Montage gezeigt. In dieser ursprünglichen Lage ragt das Leiterelement 9 im Wesentlichen rechtwinklig zur Oberfläche 21 aus der Photovoltaikpaneele 2 hinaus. In der Figur 2 wird das Leiterelement 9 im umgebogenen Zustand gezeigt. Während der Montagebewegung entlang der Montagerichtung M wird das Anschlussdosengehäuse 1 gegen die Photovoltaikpaneele 2 bewegt. Hierbei kommt es zu einem Kontakt zwischen dem Führungselement 8 und dem Leiterelement 9. Durch diesen Kontakt wird das Leiterelement 9 entsprechend umgelenkt bzw. umgebogen, so wie dies in der Figur 2 dargestellt ist. Das Umbiegen hat den Vorteil, dass das Leiterelement 9 während des Aufsetzens des Anschlussdosengehäuses 1 auf der Photovoltaikpaneele 2 vorgeformt bzw. umgebogen wird, sodass dieses möglichst einfach an die Elektroelemente 14, die im Innenraum 6 des Anschlussdosengehäuses 1 angeordnet sind, elektrisch angeschlossen werden kann. Besonders vorteilhaft ist es, wenn die Kontaktstelle zwischen dem Leiterelement 9 und den Elektroelementen 14 nicht in einer Ebene liegt, welche rechtwinklig zur Oberfläche 21 der Photovoltaikpaneele 2 verläuft. Denn hier müssen die Werkzeuge entsprechend ausgebildet sein, was in der Montage üblicherweise zu Komplikationen führt. Besonders bevorzugt liegt die Kontaktstelle zwischen dem Leiterelement 9 und den Elektroelementen 14 in einer Ebene, welche parallel oder geneigt zur Oberfläche 21 der Photovoltaikpaneele 2 verläuft. Dies wird dann in den Figuren 5 und 6 entsprechend gezeigt, welche untenstehend erläutert werden. Das Leiterelement 9 wird durch das Führungselement 8 entweder vollständig umgebogen oder aber nur teilweise umgebogen. Beim teilweisen Umbiegen wird das Leiterelement dann mit Hilfe von weiteren Werkzeugen zusätzlich umgebogen.

Vorzugsweise weist das den elektrischen Strom leitende Leiterelement 9 die Gestalt eines Flachbandes oder eines Anschlussbandes auf. Das Leiterelement 9 ist typischerweise ein metallischer Streifen.

Das Führungselement 8 ragt hier in die Öffnung 10 ein und verkleinert deren Querschnitt mit zunehmendem Abstand zur Bodenebene.

Der Innenraum 6 weist gegenüber der mindestens einer Öffnung 10 eine grössere Montageöffnung 28 auf. Diese Montageöffnung 28 ist mit einem nicht gezeigten Deckel verschliessbar. Über die Montageöffnung 28 kann während der Montage oder im Wartungsfall Zugang zum Innenraum 6 und den darin angeordneten Elektroelementen 14 geschaffen werden. Der Deckel wird entsprechend formschlüssig und/oder stoffschlüssig mit dem Anschlussdosengehäuse 1 verbunden. Die Verbindung zwischen Anschlussdosengehäuse 1 bzw. der Seitenwandung 3 und dem Deckel ist dabei so ausgebildet, dass keine Feuchtigkeit in den Innenraum 6 gelangen kann.

Von den Figuren 1 bis 4 kann erkannt werden, dass das Führungselement 8 in der besonders bevorzugten Ausführungsform die Form einer Fläche 29 aufweist. Die Fläche 29 steht dabei geneigt zur Bodenebene 7 und somit auch geneigt zur allgemeinen Ausrichtung der Photovoltaikpaneele 2. Durch diese Neigung wird das Leiterelement 9 in die entsprechende Richtung umgebogen.

In einer alternativen Ausführungsform kann das Führungselement 8 auch die Form einer linienförmigen Struktur aufweisen. Beispielsweise wäre es denkbar, dass sich ein stegartiger Bereich von der Fläche 29 erhebt und dieser stegartige Bereich vorne im Bereich der Kontaktstelle zur Kontaktierung des Führungselementes 8 linienförmig ausgebildet ist.

Das Führungselement 8 liegt im Bereich der mindestens einen Öffnung 10. Das Führungselement 8 erstreckt sich hier über die gesamte Länge der Öffnung 10. Besonders bevorzugt ist das Führungselement 8 ausschliesslich im Bereich der mindestens einen Öffnung 10 angeordnet. In der vorliegenden Ausführungsform ist genau eine Öffnung 10 angeordnet und das Führungselement 8 erstreckt sich über die gesamte Länge dieser Öffnung 10.

Das Führungselement 8 liegt in der gezeigten Ausführungsform im Innenraum 6. Die Öffnung 10 wird dabei dem Innenraum 6 zugeordnet. In alternativen, in den Figuren nicht gezeigten, Ausführungsformen, ist es auch denkbar, dass sich das Führungselement 8 auch ausserhalb des Innenraums 6 erstreckt. In einer weiteren Variante erstreckt sich das Führungselement 8 sowohl im Innenraum 6 als auch ausserhalb des Innenraums 6. Das Führungselement 8 durchdringt dabei die Bodenebene 7.

Das Führungselement 8 steht in der vorliegenden Ausführungsform im Wesentlichen geneigt zur Bodenebene 7. Über diese Neigung wird das Leiterelement 9 entsprechend umgeformt. Alternativ kann das Führungselement 8 auch gekrümmt zur Bodenebene 7 ausgebildet sein.

Die Neigung und/oder der Grad der Krümmung des Führungselementes 8 zur Bodenebene 7 gesehen nimmt mit zunehmender Distanz zwischen Bodenebene 7 und Innenraum 6 bevorzugt zu. Das heisst, dass je weiter das Führungselement 8 sich in den Innenraum 6 von der Bodenebene 7 gesehen hineinerstreckt, der Grad der Krümmung bzw. die Neigung grösser wird.

In der vorliegenden gezeigten Ausführungsform umfasst das Führungselement 7 einen ersten Abschnitt 11 und einen sich daran anschliessenden zweiten Abschnitt 12. Der erste Abschnitt 11 verläuft im Wesentlichen rechtwinklig zur Bodenebene. Der erste Abschnitt 11 dient im Wesentlichen der Einführung des Leiterelements 9 in die Öffnung 10. Der zweite Abschnitt 12 verläuft gekrümmt oder bzw. und/oder geneigt zur Bodenebene 7. Der Übergang zwischen dem ersten Abschnitt 11 und dem zweiten Abschnitt 12 kann gerundet sein.

Das Führungselement 8 ist vorzugsweise am Anschlussdosengehäuse 1 angeformt und stellt einen Teil der Seitenwandung 3 dar. In anderen Ausführungsformen kann das Führungselement 8 ebenfalls am Anschlussdosengehäuse 1 angeformt sein und dabei einen Teil der Öffnung 10 darstellen. In der hier gezeigten Ausführungsform stellt das Führungselement 8 sowohl einen Teil der Seitenwandung 3 als auch einen Teil der Wand dar, welche die Öffnung 10 begrenzt. Die Wand, welche die Öffnung 10 begrenzt, trägt das Bezugszeichen 13.

Durch die Anformung des Führungselementes 8 am Anschlussdosengehäuse 1 kann eine einstückige Struktur bereitgestellt werden. Das Anschlussdosengehäuse 1 kann also mit dem Führungselement 8 durch ein Kunststoffspritzgiessverfahren entsprechend hergestellt werden.

Weiter umfasst das Anschlussdosengehäuse 1 mindestens eine, hier zwei Anschlussstellen 30, durch welche Teile der Elektroelemente 14 hindurchgeführt werden. Über diese Anschlussstellen 30 kann ein externes elektrisch leitendes Element, wie beispielsweise ein Kabel oder ein Stecker, an die Anschlussdose 18 angeschlossen und mit den Elektroelementen 14 elektrisch verbunden werden. Die Anschlussstellen 30 weisen längliche Öffnungen 31 auf, welche durch die Anschlussstellen 30 in den Innenraum 6 hineinragen. Über diese Öffnungen 31 werden die Elektroelemente 14 bzw. Teile der Elektroelemente 14 für die Kontaktierung mit den externen elektrisch leitenden Elementen nach aussen geführt.

Die Anschlussdose 18, welche in den Figuren gezeigt wird, umfasst ein Anschlussdosengehäuse 1 nach den obiger Beschreibung und Elektroelemente 14, die im Innenraum 6 angeordnet sind. Die Elektroelemente 14 dienen der Wegführung von durch die Photovoltaikpaneele 2 erzeugter elektrischer Energie.

Die Elektroelemente 14 umfassen vorzugsweise Verbindungselemente 15, eine Bypass-Diode 16 und Anschlusselemente 17. Die Verbindungselemente 15 werden elektrisch leitend mit dem Leiterelement 9 der Photovoltaikpaneele 2 verbunden. Weiter steht die Bypass-Diode 16 mit den Verbindungselementen 15 in Verbindung. Die Verbindungselemente 15 stehen dann mit den Anschlusselementen 17 elektrisch leitend in Verbindung. Die Anschlusselemente 17 ragen durch die Öffnung 30 hindurch bzw. in die Öffnung 30 hinein, wo sie dann mit einen Kabel verbunden werden können. Die Anschlusselemente 17 sind hierfür entsprechend ausgebildet.

Die Verbindungselemente 15 weisen in der vorliegenden Ausführungsform Kontaktflächen 22 auf. Über diese Kontaktflächen 22 wird das Leiterelement 9 elektrisch leitend mit dem Verbindungselemente 15 verbunden. In allgemeiner Form kann gesagt werden, dass die Elektroelemente 14 die besagten Kontaktflächen 22 aufweist. Die Kontaktflächen 22 erstrecken sich vorzugsweise in einer Ebene, die parallel oder geneigt zur Oberfläche 21 der Photovoltaikpaneele 2 verläuft. Folglich liegt auch die Verbindungsstelle zwischen Verbindungselement 15 und Kontaktfläche 22 ein einer entsprechenden Ebene. Vorteilhafterweise stehen die Kontaktflächen 22 nicht rechtwinklig zur Oberfläche 21 der Photovoltaikpaneele 2. Das Leiterelement 9 muss während der Montage von der rechtwinkligen Ausrichtung in die parallele oder geneigte Ebene umgebogen bzw. verformt werden. Dies kann vollständig oder teilweise durch das Führungselement 8 erfolgen. Bei der vollständigen Verformung liegt das Leiterelement 9 bei positionierter Anschlussdose 18 bereits in der korrekten Lage zur Verbindung mit den Elektroelementen 14. Bei der teilweisen Verformung liegt das Leiterelement 9 bei positionierten Anschlussdose 18 noch nicht ganz in der korrekten Lage zu Verbindung mit den Elektroelementen 14 ist aber bereits entsprechend vorgeformt.

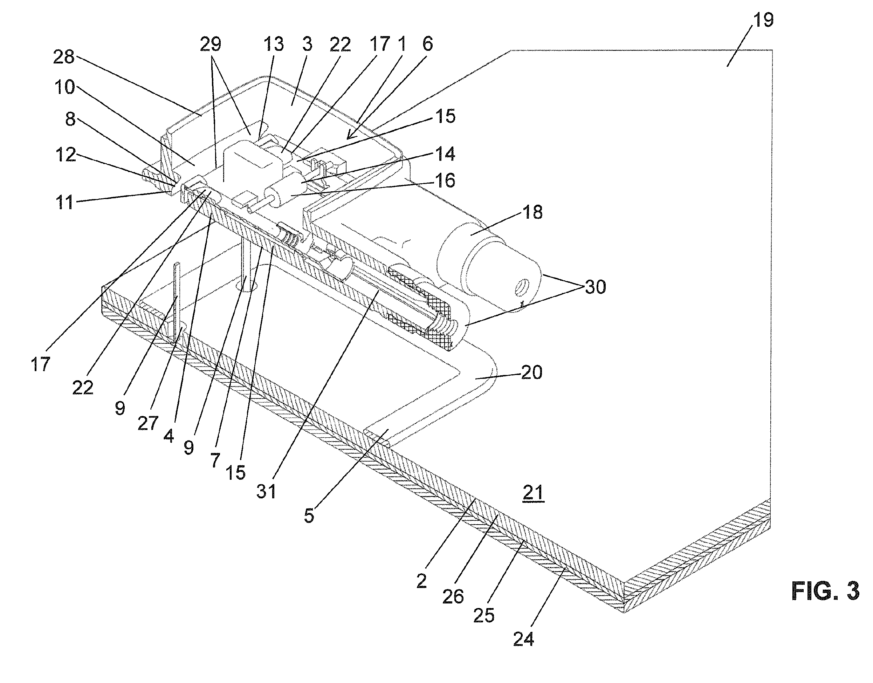

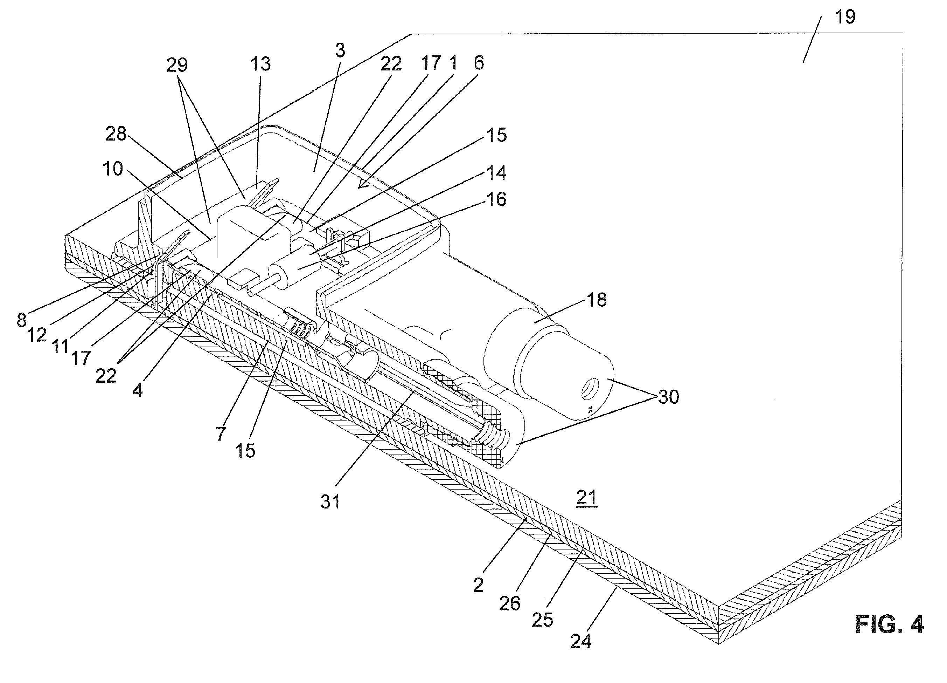

In den Figur 3 wird die Anschlussdose 18 vor der Montage gezeigt, während sich die Anschlussdose 18 in der Figur 4 in der montierten Stellung befindet. Das Anschlussdosengehäuse 1 ist in den Figuren 3 und 4 im Bereich der Seitenwandung 3 geschnitten dargestellt. In diesen Figuren kann auch die Anordnung der Elektroelemente 14 gut erkannt werden.

In der Figur 5 befindet sich die Anschlussdose 18 in der montierten Stellung. Das Leiterelement 9 ist entsprechend vorgeformt bzw. vorgebogen. Es verläuft im Wesentlichen 45° geneigt zur Oberfläche 21 der Photovoltaikpaneele 2. Mit einem Werkzeug 32 wird das Leiterelement nun weiter umgebogen, so dass dieses auf die Kontaktfläche 22 zu liegen kommt. Das Werkzeug 32 ist typischerweise eine Löt- oder eine Schweissspitze, welche das Leiterelement 9 stoffschlüssig und elektrisch leitend mit den Elektroelementen 14, hier über die Kontaktfläche 22 verbindet.

In einer alternativen hier nicht dargestellten Ausführungsform wird das Leiterelement 9 durch das Führungselement 8 derart umgebogen, dass dieses direkt mit der Kontaktfläche 22 in Kontakt kommt.

Nach einem Verfahren zur Montage einer Anschlussdose 18 bzw. eines Anschlussdosengehäuses 1 wird das Anschlussdosengehäuse 1 zur Oberfläche 21 der Photovoltaikpaneele 22 bewegt, bis das Anschlussdosengehäuse 1 mit der Bodenebene 7 ggf. über die Schicht 20 des Befestigungsmittels in Kontakt ist. Während der Bewegung wird ein Kontakt zwischen dem Leiterelement 9 und dem Führungselement 8 hergestellt. Nach der Herstellung des Kontaktes wird das Leiterelement 9 durch das Führungselement 8 geführt und gebogen bzw. verformt. Dabei wird das Leiterelement 9 entweder in seine Endstellung oder in eine Zwischenstellung umgeformt.

Nach erfolgtem Umbiegen durch das Führungselement 8 bzw. sobald das Anschlussdosengehäuse 18 mit der Oberfläche 21 der Photovoltaikpaneele 2 in Kontakt ist, wird das Leiterelement 9 elektrisch leitend mit den Elektroelementen 14 verbunden. Hierfür kann beispielsweise das Werkzeug 32 eingesetzt werden. Beim elektrischen Verbinden kann auch das Leiterelement 9 weiter umgeformt werden.

Vor dem Schritt des Bewegens des Anschlussdosengehäuses 18 zur Oberfläche 21 der Photovoltaikpaneele 2 wird das mindestens eine Leiterelement 9 im Wesentlichen rechtwinklig zur Oberfläche 21 positioniert.

### BEZUGSZEICHENLISTE

| | | | |
|---|---|---|---|
| 1 | Anschlussdosengehäuse | 31 | längliche Öffnungen |
| 2 | Photovoltaikpaneele | 32 | Werkzeug |
| 3 | Seitenwandung | 33 | Montagekleber |
| 4 | Boden | | |
| 5 | Dichtung | | |
| 6 | Innenraum | | |
| 7 | Bodenebene | | |
| 8 | Führungselement | | |
| 9 | Leiterelement | | |
| 10 | Öffnung | | |
| 11 | erster Abschnitt | | |
| 12 | zweiter Abschnitt | | |
| 13 | Wand | | |
| 14 | Elektroelemente | | |
| 15 | Verbindungselemente | | |
| 16 | Bypass-Diode | | |
| 17 | Anschlusselemente | | |
| 18 | Anschlussdose | | |
| 19 | Photovoltaikmodul | | |
| 20 | Schicht eines Befestigungsmittels | | |
| 21 | Oberfläche | | |
| 22 | Kontaktflächen | | |
| 24 | Glasschicht | | |
| 25 | Solarzellenschicht | | |
| 26 | Trägerschicht | | |
| 27 | Durchführöffnung | | |
| 28 | Montageöffnung | | |
| 29 | Fläche | | |
| 30 | Anschlussstellen | | |

## Patentansprüche

1. Anschlussdosengehäuse (1) für eine Photovoltaikpaneele (2), wobei das Anschlussdosengehäuse (1) eine Seitenwandung (3) und einen eine Bodenebene (7) aufspannenden Boden (4) umfasst,
wobei Seitenwandung (3) und Boden (4) einen Innenraum (6) zur Aufnahme von Elektroelementen (14) zur Wegführung von durch die Photovoltaikpaneele (2) erzeugter elektrischer Energie definieren, und
wobei das Anschlussdosengehäuse (1) mit dem Boden (4) auf einer Photovoltaikpaneele (2) anordbar ist, wobei im Boden (4) mindestens eine Öffnung (10) angeordnet ist, durch welche mindestens ein elektrisch leitendes Leiterelement (9) der Photovoltaikpaneele (2) in den Innenraum (6) führbar ist,
**dadurch gekennzeichnet,**
**dass** das Anschlussdosengehäuse (1) ein Führungselement (8) umfasst, welches derart angeordnet ist, dass das Leiterelement (9) der Photovoltaikpaneele (2) bei der Kontaktierung des Führungselementes (8) während der Montage umlenkbar bzw. umbiegbar ist.

2. Anschlussdosengehäuse (1) nach Anspruch 1, **dadurch gekennzeichnet, dass** das Führungselement (8) die Form einer Fläche und/oder die Form einer linienförmigen Struktur aufweist.

3. Anschlussdosengehäuse (1) nach einem der vorhergehenden Ansprüche, **dadurch gekennzeichnet, dass** das Führungselement (8) im Bereich, insbesondere ausschliesslich im Bereich, der mindestens einen Öffnung (10) angeordnet ist.

4. Anschlussdosengehäuse (1) nach einem der vorhergehenden Ansprüche, **dadurch gekennzeichnet, dass** das Führungselement (8) innerhalb des Innenraums (6) liegt oder dass das Führungselement (8) ausserhalb des Innenraum (6) liegt oder dass das Führungselement (8) sowohl im Innenraum (6) als auch ausserhalb des Innenraums (6) liegt.

5. Anschlussdosengehäuse (1) nach einem der vorhergehenden Ansprüche, **dadurch gekennzeichnet, dass** das Führungselement (8) geneigt und/oder gekrümmt, insbesondere konkav gekrümmt, zur Bodenebene (7) ausgebildet ist.

6. Anschlussdosengehäuse (1) nach einem der vorhergehenden Ansprüche, **dadurch gekennzeichnet, dass** die Neigung und/oder der Grad der Krümmung des Führungselement (8) zur Bodenebene (7) gesehen mit zunehmender Distanz zwischen Bodenebene (7) und Innenraum (6) zunimmt.

7. Anschlussdosengehäuse (1) nach einem der vorhergehenden Ansprüche, **dadurch gekennzeichnet, dass** das Führungselement (8) über einen ersten Abschnitt (11) im Wesentlichen rechtwinklig zur Bodenebene (7) verläuft und in einem zweiten Abschnitt (12) gekrümmt oder geneigt zur Bodenebene (7) verläuft.

8. Anschlussdosengehäuse (1) nach einem der vorhergehenden Ansprüche, **dadurch gekennzeichnet, dass** das Führungselement (8) am Anschlussdosengehäuse (1) angeformt ist und vorzugsweise Teil der Seitenwandung (3) ist.

9. Anschlussdosengehäuse (1) nach einem der vorhergehenden Ansprüche, **dadurch gekennzeichnet, dass** die Öffnung (10) bevorzugt einen rechteckigen oder einen ovalen oder eine runden oder einen polygonalen Querschnitt aufweist und dass das Führungselement Teile einer die Öffnung (10) begrenzende Wandung (13) darstellen.

10. Anschlussdose (18) umfassend ein Anschlussdosengehäuse (1) nach einem der vorhergehenden Ansprüche und im Innenraum (6) des Anschlussdosengehäuses angeordnete Elektroelemente (14) zur Wegführung von durch die Photovoltaikpaneele (2) erzeugter elektrischer Energie, wobei die Elektroelemente (14) mit dem mindestens einen Leiterelement (9) elektrisch leitend verbunden werden.

11. Anschlussdose (18) nach Anspruch 10, **dadurch gekennzeichnet, dass** die Elektroelemente (14) vorzugsweise Verbindungselemente (15), eine Bypass-Diode (16) und Anschlusselemente (17) umfassen, wobei die Verbindungselemente (15) der elektrisch leitenden Verbindung mit mindestens einem Leiterelement (9) der Photovoltaikpaneele (2) und der Bypassdiode (16) dienen und wobei die Anschlusselemente (17) der elektrisch leitenden Verbindung der Bypassdiode (16) und externen Elementen, wie Kabel, dienen.

12. Anschlussdose (18) nach Anspruch 10 oder 11, **dadurch gekennzeichnet, dass** die Elektroelemente (14) mindestens eine Kontaktfläche (22) aufweisen, zu welcher das Leiterelement (9) verbunden wird, wobei die Kontaktfläche (22) im montierten Zustand parallel oder geneigt zur Oberfläche (21) der Photovoltaikpaneele (2) liegt.

13. Photovoltaikmodul (19) umfassend eine Photovoltaikpaneele (22) und mindestens eine Anschlussdose (18), insbesondere nach einem der Ansprüche 10 bis 12, und/oder mit einem Anschlussdosengehäuse (1) nach einem der Ansprüche 1 bis 9, wobei die Photovoltaikpaneele (22) elektrische Leiterelemente (9) aufweist, welche aus der Photovoltaikpaneele (22) hinausragen und welche bei montiertem Anschlussdosengehäuse (1) in den Innenraum (6) des Anschlussdosengehäuses (1) hineinragen.

14. Photovoltaikmodul (19) nach Anspruch 13, **dadurch gekennzeichnet, dass** das Anschlussdosengehäuse (1) über ein Befestigungsmittel (20), insbesondere eine Klebeverbindung, mit der Photovoltaikpaneele (19) in Verbindung steht.

15. Verfahren zur Montage einer Anschlussdose nach einem der Ansprüche 10 bis 12 bzw. eines Anschlussdosengehäuses nach einem der Ansprüche 1 bis 9, **dadurch gekennzeichnet, dass** das Anschlussdosengehäuse (1) zur Oberfläche (21) der Photovoltaikpaneele (22) bewegt wird, bis das Anschlussdosengehäuse (1) mit der Bodenebene (7) ggf. über das Befestigungsmittel in Kontakt ist, wobei während der Bewegung ein Kontakt zwischen dem Leiterelement (9) und dem Führungselement (8) hergestellt wird, und wobei nach der Herstellung des Kontaktes das Leiterelement (9) durch das Führungselement (8) geführt und gebogen wird.

16. Verfahren nach Anspruch 15, **dadurch gekennzeichnet, dass**, sobald das Anschlussdosengehäuse (18) mit der Oberfläche (21) der Photovoltaikpaneele (22) in Kontakt ist, das Leiterelement (9) elektrisch leitend mit den Elektroelementen (14) verbunden wird.

17. Verfahren nach Anspruch 15 oder 16, **dadurch gekennzeichnet, dass** vor dem Schritt des Bewegens des Anschlussdosengehäuses (18) zur Oberfläche (21) der Photovoltaikpaneele (22) das mindestens eine Leiterelement (9) im Wesentlichen rechtwinklig zur Oberfläche (21) positioniert wird.

18. Verfahren nach einem der Ansprüche 15 bis 17, **dadurch gekennzeichnet, dass** das mindestens eine Leiterelement (9) vor oder während des Verbindens mit den Elektroelementen (14) weiter umgeformt wird.
